# EUROPÄISCHE PATENTSCHRIFT

(11) **EP 2 072 591 B1**
(45) Veröffentlichungstag und Bekanntmachung des Hinweises auf die Patenterteilung: **02.03.2011**
(21) Anmeldenummer: 08171080.8
(22) Anmeldetag: 09.12.2008
(51) Int. Cl.: C09D 183/04, C08L 83/04, C09D 183/05, C09D 183/07

(54) **Vernetzbare Siliconbeschichtungszusammensetzungen**
Crosslinkable silicone coating compositions
Composition polysiloxane réticulable pour revêtements

(30) Priorität: 17.12.2007 DE 102007055844
(43) Veröffentlichungstag der Anmeldung: 24.06.2009
(73) Patentinhaber: Wacker Chemie AG, 81737 München (DE)
(72) Erfinder: Herzig, Christian, 83329, Waging (DE); Joachimbauer, Martina, 84533, Haiming (DE); Lautenschlager, Hans, 84533, Haiming (DE)
(74) Vertreter: Deffner-Lehner, Maria

(56) Entgegenhaltungen:
- EP-A- 1 323 768
- WO-A-2007/023084
- DE-A1- 19 548 474
- DE-A1- 19 701 393
- DE-A1- 19 856 075
- US-B1- 6 274 692

## Beschreibung

Die Erfindung betrifft vernetzbare Siliconbeschichtungszusammensetzungen und deren Verwendung.

US 5,241,034 beschreibt über Kohlenwasserstoffbrücken verzweigte Siloxane, die SiC-gebundene ω-ungesättigte Gruppen aufweisen. Diese ω-ungesättigten Gruppen sind längerkettige Alkenylgruppen, bevorzugt 5-Hexenylgruppen, über die diese Siloxane in einer Pt-katalysierten Reaktion mit Organohydrogenpolysiloxanen vernetzt werden können. Auch zur Herstellung dieser verzweigten Siloxane wird die Hydrosilylierungsreaktion eingesetzt. Der ebenfalls Ptkatalysierte Reaktionsablauf folgt im Wesentlichen statistischen Gesetzmäßigkeiten. Mit der beschriebenen Technik können multialkenylfunktionelle Organopolysiloxane hergestellt werden.

Aus US 5,616,672 sind schnell vernetzende Formulierungen bekannt, die über reguläre T-Einheiten der Formel RSiO_{3/2} verzweigte Siloxane mit endständigen Alkenylgruppen enthalten.
Der Einbau dieser T-Einheiten ist in ausreichender Geschwindigkeit nur über basenkatalysierte Prozesse möglich, was die weit verbreiteten säurekatalysierten Verfahren ausschließt.

Ähnlich verhält es sich mit den über Q-Einheiten verzweigte Siloxane mit endständigen Alkenylgruppen aufgebauten Formulierungen der WO 2005/005544 A1, welche ebenfalls hohe Vernetzungsgeschwindigkeiten erreichen. Zur Synthese eignen sich ebenfalls nur basische Herstellprozesse, so dass dieses Prinzip nicht allgemein verwendbar ist.

Aus US 6,258,913 ist bekannt, dass sich schnell vernetzbare verzweigte Alkenylsiloxane auch aus Alkenylsiloxanen und Alkenyl-hydrogensiloxanen herstellen lassen. Allerdings ist hierfür eine Hydrosilylierungsreaktion erforderlich, zu deren Durchführung Edelmetallkatalysatoren benötigt werden. Die verbrückenden Einheiten bestehen aus niedermolekularen Kohlenwasserstoffstrukturen.

WO 2007/023084 A2 beschreibt Organopolysiloxanverbindungen, die pro Molekül mindestens eine Struktureinheit der allgemeinen Formel O_{3-a/2}RₐSi-Y(SiRₐO_{3-a/2})_{b} enthalten, wobei a gleich 1 oder 2, b eine ganze Zahl von 1 bis 11 und Y ein 2- bis 12-wertiger organischer Rest ist und die über Hydrolyseverfahren und Cohydrolyse mit Silanen hergestellt werden.

In DE 195 48 474 A1 sind verzweigte Siloxanpolymere beschrieben, die über eine Hydrosilylierunsreaktion durch Umsetzung eines linearen Polysiloxans, das seitenständige Si-H Gruppen aufweist, mit einem linearen Polysiloxan, das endständigen Vinylgruppen aufweist, erhalten werden. Diese verzweigten Siloxanpolymere können in vernetzbaren Siliconbeschichtungszusammensetzungen zusammen mit Si-gebundene Wasserstoffatome aufweisenden Organopolysiloxanen, Hydrosilylierungskatalysatoren und Inhibitoren eingesetzt werden, wobei die Siliconbeschichtungszusammensetzungen für die Trennpapierbeschichtung verwendet werden können.

Es bestand die Aufgabe, vernetzbare Siliconbeschichtungszusammensetzungen bereitzustellen, die schnell vernetzen. Weiterhin bestand die Aufgabe vernetzbare Siliconbeschichtungszusammensetzungen bereitzustellen, die klebrige Stoffe abweisende Überzüge mit niedrigen Trennwerten ergeben. Weiterhin bestand die Aufgabe vernetzbare Siliconbeschichtungszusammensetzungen bereitzustellen, die klebrige Stoffe abweisende Überzüge mit niedrigen Extraktwerten, d.h. geringen Anteilen an extrahierbaren unvernetzten Siliconpolymeren, ergeben. Die Aufgabe wird durch die Erfindung gelöst.

Gegenstand der Erfindung sind vernetzbare Siliconbeschichtungszusammensetzungen enthaltend
(1) Alkenylgruppen aufweisende Organopolysiloxane, die pro Molekül mindestens eine Struktureinheit der allgemeinen Formel

   O_{3-n/2}RₙSi-Y(SiRₙO_{3-n/2})ₐ (I)

   und
   mindestens 2 Einheiten der allgemeinen Formel

   R¹R_{b}SiO_{(3-b)/2} (II)

   enthalten,
   und Einheiten der allgemeinen Formel

   R_{c}SiO_{(4-c)/2} (III)

   enthalten, wobei
   a 1 oder 2, vorzugsweise 1, ist,
   b 0, 1 oder 2, vorzugsweise 1 oder 2, ist,
   c 1, 2 oder 3, vorzugsweise 2 oder 3, ist,
   n 0 oder 1, vorzugsweise 1, ist
   R gleich oder verschieden sein kann und einen einwertigen SiC-gebundenen organischen Rest mit 1 bis 30 C-Atomen, der ein oder mehrere von einander getrennte O-Atome enthalten kann und der frei von aliphatischen Kohlenstoff-Kohlenstoff-Mehrfachbindungen ist, bedeutet und
   R¹ ein Alkenylrest mit 2 bis 4 C-Atomen, vorzugsweise ein Vinylrest ist,
   Y einen zweiwertigen oder dreiwertigen organischen Rest mit 1 bis 30 C-Atomen bedeutet,
   mit der Maßgabe, die Organopolysiloxane (1) Einheiten der Formel (II) in solchen molaren Mengen enthalten, dass die Konzentration an Alkenylresten R¹ in Organopolysiloxanen (1) kleiner 2 mEqu./g (mÄquivalent pro g Organopolysiloxane (1)) beträgt.
(2) Si-gebundene Wasserstoffatome aufweisende Organopolysiloxane,
(3) die Anlagerung von Si-gebundenem Wasserstoff an aliphatische Mehrfachbindung fördernde Katalysatoren und gegebenenfalls
(4) Inhibitoren.

Vorzugsweise bedeutet R einen einwertigen, von aliphatischen Kohlenstoff-Kohlenstoff-Mehrfachbindungen freien, SiC-gebundenen Kohlenwasserstoffrest mit 1 bis 18 Kohlenstoffatomen.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl-und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.
Die Kohlenwasserstoffreste R können Ether- oder Polyethergruppen enthalten.

Bevorzugte Beispiele für R sind Methyl-, Ethyl- und Phenylreste.

Beispiele für Reste R¹ sind der Vinyl-, Allyl- und 3-Butenylrest, wobei der Vinylrest ein bevorzugtes Beispiel ist.

Eine bevorzugte Einheit der Formel (II) ist R¹R₂SiO_{1/2} und bevorzugte Einheiten der Formel (III) sind R₃SiO_{1/2} und R₂SiO, wobei R bevorzugt ein Methylrest und R¹ bevorzugt ein Vinylrest ist. Wenn R₃SiO_{1/2}-Einheiten in Organopolysiloxanen (1) enthalten sind, ist das molare Verhältnis von R¹R₂SiO_{1/2}-Einheiten zu R₃SiO_{1/2}-Einheiten vorzugsweise größer als 1, bevorzugt größer 2, besonders bevorzugt größer 3 ist.

Ein bevorzugtes Beispiel für Einheiten der Formel (II) ist daher die Vinyldimethylsiloxaneinheit. Bevorzugte Bespiele für Einheiten der Formel (III) sind daher Trimethylsiloxan- und Dimethylsiloxaneinheiten.
Vorzugsweise enthalten Organopolysiloxane (1) durchschnittlich mindestens 3 Alkenylreste R¹, bevorzugt mindestens 4 Alkenylreste R¹, bevorzugt als R¹R₂SiO_{1/2}-Einheiten (II).

Vorzugsweise enthalten die Alkenylgruppen aufweisenden Organopolysiloxane (1) pro Molekül 1, 2 , 3 , 4 oder 5 Struktureinheiten der Formel (I).

Vorzugsweise enthalten die Alkenylgruppen aufweisenden Organopolysiloxane (1) mindestens 10 Einheiten der Formel (III), bevorzugt mindestens 50 Einheiten der Formel (III), besonders bevorzugt mindestens 80 Einheiten der Formel (III).

Da n in Formel (I) vorzugsweise den Wert 1 hat, hat die Struktureinheit (I) vorzugsweise die Formel ORSi-Y(SiRO)ₐ, wobei R, Y und a die oben dafür angegebene Bedeutung haben.

Vorzugsweise hat a in Formel (I) den Wert 1 und Y ist ein zweiwertiger organischer Rest.

Beispiele für Y sind die Methylen- und die Methingruppe, die 1,1-Ethandiyl- und die 1,2-Ethandiylgruppe, die 1,4 Butandiyl- und die 1,3-Butandiylgruppe.

Enthält Y mindestens 2 C-Atome, kann dieser Rest auch ungesättigt sein. Beispiele hierfür sind Reste der Formel -CH=CH- (cis oder trans), -C(=CH₂)- und -C ≡ C-.

Bevorzugt ist Y ein organischer Rest mit maximal 12 C-Atomen, besonders bevorzugt mit 2 C-Atomen. Beispiele für besonders bevorzugte Reste sind solche der Formel -CH₂CH₂-, -CH(CH₃)-, -CH=CH-, -C(=CH₂)- und -C ≡ C- .

Die Konzentration an Alkenylresten R¹ in Organopolysiloxan (1) beträgt vorzugsweise 0,1 bis 1,2 mEqu./g, bevorzugt 0,1 bis 0,8 mEqu./g (mEqu./g = mÄquivalent pro g Substanz).

Die Viskosität der Organopolysiloxane (1) beträgt vorzugsweise 50 bis 5 000 mPa.S (25°C).

Verfahren zur Herstellung der Organopolysiloxane (1) sind in WO 2007/023084 A2, insbesondere Seite 4, Zeile 16 bis Seite 6, Zeilen 6 (incorporated by reference) beschrieben.
Ein bevorzugtes Verfahren zur Herstellung der erfindungsgemäßen Verbindungen ist die Hydrolyse von Verbindungen der allgemeinen Formel (IV)

X₃₋ₙRₙSi-Y(SiRₙX₃₋ₙ)ₐ (IV),

wobei X eine hydrolysierbare Gruppe bedeutet und R, Y, a und n die oben genannte Bedeutung haben.
Bevorzugt ist X eine Halogen-, Säure- und Alkoxygruppe; besonders bevorzugt ist X eine Chlor-, Acetat-, Formiat-, Methoxy- oder Ethoxygruppe.

Besonders bevorzugt ist ein Verfahren bei dem eine Cohydrolyse von Verbindungen der allgemeinen Formel (IV) mit Silanen der allg. Formel (V)

R²_{d}SiX_{4-d} (V),

wobei X eine hydrolysierbare Gruppe bedeutet,
R² einen Rest R oder R¹ bedeutet und
d 1, 2 oder 3 ist , bevorzugt 2 oder 3.
Bevorzugt werden als Silane (V) solche der Formel R¹R₂SiX eingesetzt, wobei R, R¹ und X die oben dafür angegebene Bedeutung haben.

Eine bevorzugte Ausführung des Verfahrens ist die Herstellung der Organopolysiloxane (1) in zwei Stufen: Eine Cohydrolyse der Verbindungen (IV) und (V) zur Herstellung eines Konzentrates, gefolgt von einer Equilibrierung dieses Konzentrats mit Organopolysiloxanen, die die Struktureinheit (I) nicht enthalten. Bei der Equilibrierung können als Organopolysiloxane solche ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan - und Monoorganosiloxaneinheiten eingesetzt werden. Bevorzugt werden lineare, endständige Triorganosiloxygruppen aufweisende Organopolysiloxane eingesetzt. Bevorzugte Beispiele hierfür sind Mischpolymerisate aus Vinyldimethylsiloxan- und Dimethylsiloxaneinheiten und Mischpolymerisate aus Trimethylsiloxan- und Dimethylsiloxaneinheiten.
Durch die Equilibrierung ergibt sich die gewünschte Konzentration an Alkenylresten R¹ in dem Organopolysiloxan (1).

Als Organopolysiloxane (2), die Si-gebundene Wasserstoffatome aufweisen, werden vorzugsweise lineare, cyclische oder verzweigte Organopolysiloxane aus Einheiten der allgemeinen Formel VI 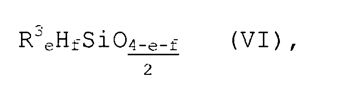 wobei
R³ gleich oder verschieden sein kann und einen einwertigen, gegebenenfalls substituierten, von aliphatischen Kohlenstoff-Kohlenstoff-Mehrfachbindungen freien Kohlenwasserstoffrest mit 1 bis 18 C-Atomen bedeutet,
e 0, 1, 2 oder 3,
f 0, 1 oder 2
und die Summe von e+f 0, 1, 2 oder 3 ist,
mit der Maßgabe, dass durchschnittlich mindestens 3 Si-gebundene Wasserstoffatome vorliegen, verwendet.

Vorzugsweise enthalten die Organosiliciumverbindungen (2) mindestens 3 Si-gebundene Wasserstoffatome.

Bevorzugt werden als Organosiliciumverbindungen (2) Organopolysiloxane der allgemeinen Formel

HₕR³₃₋ₕSiO (SiR³₂O)ₒ (SiR³HO)ₚSiR³₃₋ₕHₕ (VII)

wobei R³ die oben dafür angegebene Bedeutung hat, h 0, 1 oder 2,
o 0 oder eine ganze Zahl von 1 bis 1500 und
p eine ganze Zahl von 1 bis 200 ist,
mit der Maßgabe, dass durchschnittlich mindestens 3 Si-gebundene Wasserstoffatome, vorliegen, verwendet.

Im Rahmen dieser Erfindung soll Formel VII so verstanden werden, dass ○ Einheiten -(SiR³₂O)- und p Einheiten -(SiR³HO)-in beliebiger Weise im Organopolysiloxanmolekül verteilt sein können.

Beispiele für Kohlenwasserstoffreste R gelten im vollen Umfang für Kohlenwasserstoffreste R³.

Beispiele für solche Organopolysiloxane (2) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Die Organopolysiloxane (2) besitzen vorzugsweise eine durchschnittliche Viskosität von 10 bis 1 000 mPa.s bei 25°C.

Organopolysiloxan (2) wird vorzugsweise in Mengen von 0,5 bis 3,5, bevorzugt 1,0 bis 3,0 Grammatom, Si-gebundenen Wasserstoff je Mol Alkenylrestes R¹ im Organopolysiloxan (1) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid.

Die Katalysatoren (3) werden vorzugsweise in Mengen von 10 bis 1000 Gew.-ppm (Gewichtsteilen je Million Gewichtsteilen), bevorzugt 20 bis 200 Gew.-ppm, jeweils berechnet als elementares Platinmetall und bezogen auf das Gesamtgewicht der Organopolysiloxane (1) und (2), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (4), enthalten.

Als Inhibitoren (4) können auch bei den vernetzbaren Siliconbeschichtungszusammensetzungen alle Inhibitoren verwendet werden, die auch bisher für den gleichen Zweck verwendet werden konnten.

Beispiele für Inhibitoren (4) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-l-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC≡C-C(CH₃)(OH)-CH₂-CH₂-CH=C(CH₃)_{2,} käuflich erwerblich unter dem Handelsnamen "Dehydrolinalool" bei der Fa. BASF.

Wird Inhibitor (4) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (1) und (2), eingesetzt.

Beispiele für weitere Bestandteile, die bei den vernetzbaren Siliconbeschichtungszusammensetzungen mitverwendet werden können, sind Mittel zur Einstellung der Trennkraft, die Aerosolbildung reduzierende Additive, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

R⁴R³₂SiO_{1/2} und SiO₂ ,

sogenannte MQ-Harze, wobei R⁴ ein Wasserstoffatom, ein Kohlenwasserstoffrest R³, wie Methylrest, oder ein Alkenylrest R¹, wie Vinylrest, ist, und R³ die oben dafür angegebene Bedeutung haben und die Einheiten der Formel R⁴R³₂SiO_{1/2} gleich oder verschieden sein können. Das Verhältnis von Einheiten der Formel R⁴R³₂SiO_{1/2} zu Einheiten der Formel SiO₂ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (1) und (2), eingesetzt.

Beispiele für die Aerosolbildung reduzierenden Additive, auch Antimisting Additive genannt, sind verzweigte Siloxancopolymere, wie sie beispielsweise in US 6,764,712, insbesondere Spalte 1, Zeile 57 bis Spalte 2, Zeile 25 (incorporated by reference) und US 7,238,755, insbesondere Spalte 2, Zeile 8 bis Spalte 3, Zeile 8 (incorporated by reference) beschrieben sind.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon. Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (1) und (2), eingesetzt.

Die Reihenfolge beim Vermischen der Bestandteile (1), (2), (3) und gegebenenfalls (4) ist zwar nicht entscheidend, für die Praxis hat es sich jedoch bewährt, den Bestandteil (3), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C, bevorzugt bei 100 bis 150°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörpern handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen.

### Die erfindungsgemäßen vernetzbaren

Siliconbeschichtungszusammensetzungen haben den Vorteil, dass sie schnell vernetzen und daher auch in schnell laufenden Beschichtungsanlagen eingesetzt werden können.
Sie eignen sich daher insbesondere zur Verwendung in Beschichtungsanlagen mit Aushärtezeiten von vorzugsweise 0,5 bis 15 Sekunden, bevorzugt von 1,5 bis 18 Sekunden bei denen die erfindungsgemäßen Zusammensetzungen bei Geschwindigkeiten von 20 bis 1600 m/min auf die zu beschichtenden Oberflächen aufgebracht werden.

Weiterhin haben die erfindungsgemäßen vernetzbaren Siliconbeschichtungszusammensetzungen den Vorteil, dass klebrige Stoffe abweisende Überzüge, die niedrige Trennwerte und niedrige Extraktwerte aufweisen, erhalten werden. Geringe Extraktwerte, d.h. geringe Anteile an extrahierbaren unvernetzten Siliconpolymeren, werden bereits bei kurzen Vernetzungszeiten erreicht. Dadurch wird ein Übertrag der unvernetzten Anteile auf den Kleber vermieden und so die Klebkraft des Klebers beibehalten.

Niedrige Trennkraft ist insbesondere bei sehr dünnem Etikettenmaterial sehr wichtig, da dadurch die Verwendung kostengünstigerer Materialien ermöglicht wird. Diese niedrigen Trennwerte waren bisher nicht, oder nur bei gleichzeitiger Schädigung des Klebers durch hohe Extraktanteile möglich.

### Herstellung der erfindungsgemäßen Organopolysiloxane (1):

a) Kondensat aus Struktureinheiten (I) und (II):
   270 g Vinyldimethylchlorsilan werden mit 96 g eines 1:1-Additionsprodukts aus Hydrogenmethyldichlorsilan und Vinylmethyldichlorsilan homogen gemischt. Diese Mischung wird durch Zutropfen von 750 ml 5%-iger HCl-Lösung unter Eiskühlung cohydrolysiert. Nach Phasentrennung wäscht man das erhaltene Oligomer je 2 Mal mit Wasser und 2%-iger Bicarbonatlösung. Das praktisch neutrale Öl wird bei 3 mbar und 130°C von flüchtigen Bestandteilen befreit. Man erhält neben 144 g Divinyltetramethyldisiloxan als oligomeren Rückstand 107 g eines Cohydrolysats der Chlorsilane mit einer Viskosität von 14,2 mm²/s (25 °C).
b) Equilibrierung von Kondensat und linearem Vinylsiloxan:
   Die angegebenen Mengen des unter a) hergestellten Kondensats und die in Tabelle 1 angegebene Menge eines linearen Vinylsiloxans aus Vinyldimethylsiloxy- und
   Dimethylsiloxygruppen mit einem durchschnittlichen Molekulargewicht von 12600 Da werden homogen gemischt und nach Zugabe von 200 ppm Phosphornitrilchlorid (gelöst in der 1,5-fachen Menge Ethylacetat) bei 120°C bis zur Viskositätskonstanz equilibriert. Im Fall von Siloxan 1.4 wurde die Hälfte des linearen Vinylsiloxans durch ein funktionsloses Siliconöl derselben Kettenlänge ersetzt.
   Nach Erreichen konstanter Viskosität wird der Ansatz mit 1% MgO desaktiviert, filtriert und im Vakuum bei 120°C von flüchtigen Bestandteilen befreit.

Für die so erhaltenen vinylgruppenhaltigen Organopolysiloxane (1) ist in Tabelle 1 jeweils die Menge an Struktureinheiten der Formel (I) (Gehalt an (I) in Mol %) und die Konzentration an Vinylgruppen (C=C-Gehalt in mEqu./g)angegeben.
Die vinylgruppenhaltigen Organopolysiloxane (1) werden direkt zur Herstellung der erfindungsgemäßen
Siliconbeschichtungszusammensetzungen verwendet.

**Tabelle 1:**

| | Vinyl-siloxan g | Siliconöl g | Kondensat g | Viskosität mm²/s | Jodzahl | C=C-Gehalt mEqu./g | Gehalt an (I) Mol % |
|---|---|---|---|---|---|---|---|
| Siloxan 1.1 | 472 | - | 4,2 | 290 | 6,4 | 0,25 | 0,4 |
| Siloxan 1.2 | 472 | - | 12,6 | 216 | 9,7 | 0,38 | 1,2 |
| Siloxan 1.3 | 472 | - | 37,8 | 222 | 16,7 | 0,66 | 3,6 |
| Siloxan 1.4 | 236 | 236 | 19,6 | 218 | 8,3 | 0,33 | 1,9 |

### Vergleichspolymere:

### Siloxan V1:

Verzweigtes Siloxanpolymer mit Vinylendgruppen hergestellt nach WO 2007/023084 mit einer Jodzahl von 54 (C=C-Gehalt von 2,13 mEqu./g).

### Siloxan V2:

Lineares Polydimethylsiloxan mit Vinyl- und Methylendgruppen im Verhältnis von 3,5 : 1 und einer Jodzahl von 5,4 (C=C-Gehalt von 0,21 mEqu./g) gemäß US 6,274,692.

### Siloxan V3:

Verzweigtes Siloxanpolymer mit 5-Hexenylgruppen und 1,6-Hexandiylbrücken gemäß US 5,241,034, hergestellt aus der Hydrogenvorstufe HMe₂SiO (Me₂SiO)₆₃ (HMeSiO)_{0,9}SiHMe₂ und 1,5-Hexadien bei einem C=C/SiH-Verhältnis von 3,2 (Y = -(CH₂)₆- , R¹ = -(CH₂)₄-CH=CH₂, R = -CH₃ , a = 1, b = 2, c = 2 oder 3). Die Jodzahl beträgt 10,4 (C=C-Gehalt von 0,41 mEqu./g).

### Siloxan V4:

Lineares Polydimethylsiloxan mit Vinylendgruppen und einer Jodzahl von 4,1 (C=C-Gehalt von 0,16 mEqu./g).

### Siliconbeschichtungszusammensetzungen:

In den folgenden Anwendungsbeispielen beziehen sich alle Angaben von Teilen und Prozentsätzen auf das Gewicht. Die Beispiele wurden bei einem Druck der umgebenden Atmosphäre, also etwa bei 1012 mbar, und bei Raumtemperatur, also etwa bei 21 °C, durchgeführt. Die Viskositäten wurden bei 25°C gemessen.

### Beispiele und Vergleichsversuche:

Als Standardformulierung wurde eine Mischung aus
100 Gew.-teile jeweils der erfindungsgemäßen Polymere Siloxan 1.1 - 1.4 und der Vergleichspolymere Siloxan V1 - V4, einem linearen Hydrogenmethylsiloxan mit Trimethylsiloxanendeinheiten und einer Viskosität von 25 mPa.s (25°C), in einer Menge die ein molares Verhältnis der SiH-Gruppen zu den ungesättigten Gruppen des jeweiligen Polymers von 1,6 : 1 gewährleistet,
1 Gew.-teil einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa.s bei 25°C und 0,25 Gew.-teile 1-Ethinylcyclohexanol eingesetzt.

Diese Mischungen wurden zur Papierbeschichtung eingesetzt.

Als Substrat wurde Papier der Fa. Ahlstrom mit der Bezeichnung Glassine Silca Classic verwendet. Die Beschichtung erfolgte auf einer Beschichtungsanlage der Fa. Dixon der Modellnummer 1060 mit einem 5 Walzen-Auftragswerk, bei 60 m/min. Die Beschichtung wurde im Trocknungsofen mit 3 m Länge bei 140°C ausgehärtet. Dies entspricht einer Vernetzungszeit von 3 Sekunden.

Das Beschichtungsgewicht wurde mittels Röntgenfluoreszenzanalyse in Referenz zu einem geeigneten Standard bestimmt.

Die Aushärtung des Beschichtungssystems wurde mittels Extraktion unvernetzter Anteile in MIBK (=Methylisobutylketon) und Ermittlung des extrahierten Siliciumgehalts durch Atomabsorptionsspektrometrie bestimmt.

Die beschichteten Papiere wurden in einem Versuch mit einem in der Etiketten- und Klebebandindustrie gängigen, Testklebebändern TESA T 6154 und TESA A 7475 nach 24 Stunden beklebt und nach FINAT Testmethode FTM 10 bei einem Druck von 70 g/cm² bei 40°C 20 Stunden gelagert.

Die Trennwerte der so hergestellten Laminate wurden nach FINAT Testmethode FTM 10 bei Abzugsgeschwindigkeiten von 0,3 m/min., 10 m/min. und 300 m/min bestimmt und sind in N/m angegeben.

Die Testmethoden sind in der Broschüre DEHESIVE® Silicones Testmethoden der Fa. Wacker Chemie AG und im FINAT Technischen Handbuch (Testmethoden) 6. Ausgabe beschrieben.

Die Ergebnisse sind in der Tabelle 2 zusammenfasst.

**Tabelle 2:**

| Polymer | C=C-Gehalt | Extrakt | Trennwerte A 7475 | | | Trennwerte T 6154 | | |
|---|---|---|---|---|---|---|---|---|
| | mEqu./g | Gew.-% | 0,3 m/min. | 10 m/min. | 300 m/min. | 0,3 m/min. | 10 m/min. | 300 m/min. |
| Siloxan 1.1 | 0,25 | 2,2 | 7,1 | 7,2 | 7,9 | 2,2 | 5,4 | 9,4 |
| Siloxan 1.2 | 0,38 | 1,2 | 7,9 | 6,2 | 8,0 | 3,4 | 5,5 | 8,8 |
| Siloxan V1 | 2,13 | 0,8 | 178 | 53,2 | 22,4 | 101 | 39,2 | 11,7 |
| Siloxan 1.4 | 0,33 | 3,8 | 2,5 | 4,2 | 9,3 | 1,0 | 2,3 | 8,9 |
| Siloxan V2 | 0,21 | 11,9 | 5,3 | 9,2 | 16,6 | 0,6 | 3,0 | 13,9 |

Bei sehr niedrigen Extraktwerten zeigen die erfindungsgemäßen Formulierungen mit den Siloxanen 1.1 und 1.2 gegenüber den beiden Testklebebändern überraschend niedrige Trennwerte, die sich aber bei dem hohen Vinylgehalt des Vergleichspolymers Siloxan V1 (gemäß WO 2007/023084) nicht mehr realisieren lassen, auch wenn das Siloxan V1 die gleichen Strukturelemente enthält.

Formulierungen auf Basis von Siloxanen mit zusätzlichen Methylendgruppen (Siloxan 1.4) ergeben bei grundsätzlich höherem Extraktniveau speziell bei niedriger
Abzugsgeschwindigkeit auch niedrigere Trennwerte im Vergleich zu Siloxanen 1.1 und 1.2 mit 100% Alkenylenden. Im Vergleich zum partiell Methyl-terminierten Siloxan V2 (gemäß US 6,274,692) zeigt das ebenfalls partiell Methyl-terminierte Siloxan 1.4 bei sehr akzeptablem Extraktniveau auch wieder reduzierte Trennwerte im Vergleich zum Stand der Technik.

Wie oben beschrieben, wurden mit den erfindungsgemäßen Polymeren Siloxanen 1.2 und 1.3 sowie den Vergleichspolymeren Siloxan V3 und Siloxan V4 Beschichtungen hergestellt und bei einer Temperatur von 140°C 6 Sekunden bzw. 1,2 Sekunden vernetzt. Die Aushärtung der Beschichtungen wurde mittels Extraktion unvernetzter Anteile in MIBK, wie oben beschrieben, bestimmt und die Extraktwerte in Tabelle 3 zusammengefasst.

**Tabelle 3:**

| Polymer | C=C-Gehalt | Extrakt nach 6 sek./140°C | Extrakt nach 1,2 sek./140°C |
|---|---|---|---|
| | mEqu./g | Gew.-% | Gew.-% |
| Siloxan 1.2 | 0,38 | 1,2 | 7,4 |
| Siloxan 1.3 | 0,66 | 0,9 | 2,8 |
| Siloxan V3 | 0,41 | 2,2 | 5,0 n |
| Siloxan V4 | 0,16 | 2,6 | > 30 |

Die voll vulkanisierten Formulierungen (6 sek. Aushärtezeit) mit den erfindungsgemäßen Siloxanen 1.2 und 1.3 zeigen im Vergleich zu den zwei Formulierungen mit Vergleichspolymeren Siloxan V3 und V4 ein perfekt niedriges Extraktniveau von nur etwa der Hälfte des Wertes der Vergleichsformulierungen. Zwar hat die Formulierung mit dem Hexenyl-Siloxan V3 (gemäß US 5,241,034) auch eine hohe Vernetzungsgeschwindigkeit (wie aus dem Extraktwert nach 1,2 sek. Aushärtezeit ersichtlich), erreicht aber in der voll vulkanisierten Siliconbeschichtung (6 sek. Aushärtezeit) nicht das sehr gute Extraktniveau erfindungsgemäßer Formulierungen. Das lineare Vergleichspolymer V4 ist sowohl bei 1,2 sek. Aushärtungszeit als auch bei 6 sek. Aushärtezeit den erfindungsgemäßen Siloxanen 1.2 und 1.3 unterlegen.

## Patentansprüche

1. Vernetzbare Siliconbeschichtungszusammensetzungen enthaltend
(1) Alkenylgruppen aufweisende Organopolysiloxane, die pro Molekül mindestens eine Struktureinheit der allgemeinen Formel
O_{3-n/2}RₙSi-Y (SiRₙO_{3-n/2})ₐ (I)
und
mindestens 2 Einheiten der allgemeinen Formel
R¹R_{b}SiO(_{3-b})_{/2} (II)
enthalten,
und Einheiten der allgemeinen Formel
R_{c}SiO(_{4-c})_{/2} (III)
enthalten, wobei
a 1 oder 2, vorzugsweise 1, ist,
b 0, 1 oder 2, vorzugsweise 1 oder 2, ist,
c 1, 2 oder 3, vorzugsweise 2 oder 3, ist,
n 0 oder 1, vorzugsweise 1, ist
R gleich oder verschieden sein kann und einen einwertigen SiC-gebundenen organischen Rest mit 1 bis 30 C-Atomen, der ein oder mehrere von einander getrennte O-Atome enthalten kann und der frei von aliphatischen Kohlenstoff-Kohlenstoff-Mehrfachbindungen ist, bedeutet und
R¹ ein Alkenylrest mit 2 bis 4 C-Atomen, vorzugsweise ein Vinylrest ist,
Y einen zweiwertigen oder dreiwertigen organischen Rest mit 1 bis 30 C-Atomen bedeutet,
mit der Maßgabe, dass die Organopolysiloxane (1) Einheiten der Formel (II) in solchen molaren Mengen enthalten, dass die Konzentration an Alkenylresten R¹ in Organopolysiloxanen (1) kleiner 2 mEqu./g (mÄquivalent pro g Substanz) beträgt.
(2) Si-gebundene Wasserstoffatome aufweisende Organopolysiloxane,
(3) die Anlagerung von Si-gebundenem Wasserstoff an aliphatische Mehrfachbindung fördernde Katalysatoren und gegebenenfalls
(4) Inhibitoren.

2. Vernetzbare Siliconbeschichtungszusammensetzungen nach Anspruch 1, **dadurch gekennzeichnet, dass** R¹ ein Vinylrest ist.

3. Vernetzbare Siliconbeschichtungszusammensetzungen nach Anspruch 1 oder 2, **dadurch gekennzeichnet, dass** Y ein Rest der Formel -CH₂CH₂- ist.

4. Vernetzbare Siliconbeschichtungszusammensetzungen nach Anspruch 1, 2 oder 3, **dadurch gekennzeichnet, dass** b 2 ist und c 2 oder 3 ist.

5. Formkörper hergestellt durch Vernetzung der Zusammensetzungen gemäß einem der Ansprüche 1 bis 4.

6. Formkörper gemäß Anspruch 5, **dadurch gekennzeichnet, dass** es sich um Beschichtungen handelt.

7. Formkörper gemäß Anspruch 5, **dadurch gekennzeichnet, dass** es sich um klebrige Stoffe abweisende Überzüge handelt.

8. Verfahren zur Herstellung von Beschichtungen durch Auftragen von vernetzbaren Zusammensetzungen gemäß einem der Ansprüche 1 bis 4 auf die zu beschichtenden Oberflächen und anschließende Vernetzung der Zusammensetzungen.

9. Verfahren nach Anspruch 8, **dadurch gekennzeichnet, dass** es sich bei den Beschichtungen um klebrige Stoffe abweisende Überzüge handelt, die durch Auftragen von vernetzbaren Zusammensetzungen gemäß einem der Ansprüche 1 bis 4 auf die klebrige Stoffe abweisend zu machenden Oberflächen und anschließende Vernetzung der Zusammensetzungen hergestellt werden.

## Claims

1. Crosslinkable silicone coating compositions comprising
(1) organopolysiloxanes containing alkenyl groups and comprising per molecule at least one structural unit of the general formula
O_{3-n/2}RₙSi-Y(SiRₙO_{3-n/2})ₐ (I)
and
at least 2 units of the general formula
R¹R_{b}SiO_{(3-b)/2} (II),
and units of the general formula
R_{c}SiO_{(4-c)/2} (III),
where
a is 1 or 2, preferably 1,
b is 0, 1 or 2, preferably 1 or 2,
c is 1, 2 or 3, preferably 2 or 3,
n is 0 or 1, preferably 1,
R at each occurrence may be identical or different and is a monovalent, SiC-bonded organic radical having 1 to 30 C atoms, which may contain one or more O atoms separate from one another and which is free from aliphatic carbon-carbon multiple bonds, and
R¹ is an alkenyl radical having 2 to 4 C atoms, preferably a vinyl radical,
Y is a divalent or trivalent organic radical having 1 to 30 C atoms,
with the proviso that the organopolysiloxanes (1) comprise units of the formula (II) in molar amounts such that the concentration of alkenyl radicals R¹ in organopolysiloxanes (1) is less than 2 meq/g (milliequivalents per gram of substance),
(2) organopolysiloxanes containing Si-bonded hydrogen atoms,
(3) catalysts promoting the addition of Si-bonded hydrogen to aliphatic multiple bond,
and if desired
(4) inhibitors.

2. Crosslinkable silicone coating compositions according to Claim 1, **characterized in that** R¹ is a vinyl radical.

3. Crosslinkable silicone coating compositions according to Claim 1 or 2, **characterized in that** Y is a radical of the formula -CH₂CH₂-.

4. Crosslinkable silicone coating compositions according to Claim 1, 2 or 3, **characterized in that** b is 2 and c is 2 or 3.

5. Mouldings produced by crosslinking the compositions according to any one of Claims 1 to 4.

6. Mouldings according to Claim 5, **characterized in that** they are coatings.

7. Mouldings according to Claim 5, **characterized in that** they are coatings which repel tacky substances.

8. Process for producing coatings by applying crosslinkable compositions according to any one of Claims 1 to 4 to the surfaces to be coated and then crosslinking the compositions.

9. Process according to Claim 8, **characterized in that** the coatings are coatings which repel tacky substances and are produced by applying crosslinkable compositions according to any one of Claims 1 to 4 to the surfaces to be made repellent to tacky substances and then crosslinking the compositions.

## Revendications

1. Compositions réticulables de revêtement au silicone, contenant
(1) des organopolysiloxanes présentant des groupes alcényle et qui contiennent par molécule au moins une unité de structure de formule générale
O_{3-n/2}RₙSi-Y(S1RₙO_{3-n/2})ₐ (I)
et
au moins deux unités de formule générale
R¹R_{b}SiO_{(3-b)/2} (II)
et des unités de formule générale
R_{c}SiO_{(4-c)/2} (III)
où
a vaut 1 ou 2, de préférence 1,
b vaut 0, 1 ou 2, de préférence 1 ou 2,
c vaut 1, 2 ou 3, de préférence 2 ou 3,
n vaut 0 ou 1, de préférence 1,
R peut être identique ou différent et signifie un radical organique monovalent lié par SiC comprenant 1 à 30 atomes de carbone, qui peut contenir un ou plusieurs atomes d'O séparés les uns des autres et qui est exempt de liaisons carbone-carbone aliphatiques multiples, et
R¹ représente un radical alcényle comprenant 2 à 4 atomes de carbone, de préférence un radical vinyle,
Y Y représente un radical organique divalent ou trivalent comprenant 1 à 30 atomes de carbone, à condition que les organopolysiloxanes (1) contiennent des unités de formule (II) en des quantités molaires telles que la concentration en radicaux alcényle R¹ dans les organopolysiloxanes (1) est inférieure à 2 méq/g (milliéquivalents par gramme de substance),
(2) des organopolysiloxanes présentant des atomes d'hydrogène liés par Si,
(3) des catalyseurs favorisant l'addition d'hydrogène lié par Si sur une liaison multiple aliphatique et le cas échéant
(4) des inhibiteurs.

2. Compositions réticulables de revêtement au silicone selon la revendication 1, **caractérisées en ce que** R¹ représente un radical vinyle.

3. Compositions réticulables de revêtement au silicone selon la revendication 1 ou 2, **caractérisées en ce que** Y représente un radical de formule -CH₂CH₂-.

4. Compositions réticulables de revêtement au silicone selon la revendication 1, 2 ou 3, **caractérisées en ce que** b vaut 2, c vaut 2 ou 3.

5. Corps moulés, préparés par réticulation des compositions selon l'une quelconque des revendications 1 à 4.

6. Corps moulés selon la revendication 5, **caractérisés en ce qu'**il s'agit de revêtements.

7. Corps moulés selon la revendication 5, **caractérisés en ce qu'**il s'agit de revêtements repoussant les substances adhésives.

8. Procédé pour la préparation de revêtements par application de compositions réticulables selon l'une quelconque des revendications 1 à 4 sur les surfaces à revêtir et réticulation consécutive des compositions.

9. Procédé selon la revendication 8, **caractérisé en ce que** les revêtements sont des revêtements repoussant les substances adhésives qui sont préparés par application de compositions réticulables selon l'une quelconque des revendications 1 à 4 sur les surfaces à rendre répulsives aux substances adhésives et réticulation consécutive des compositions.
